# EUROPEAN PATENT APPLICATION

(11) **EP 1 841 210 A1**
(43) Date of publication of application: **03.10.2007**
(21) Application number: 06823087.9
(22) Date of filing: 07.11.2006
(51) Int. Cl.: H04N 5/232, H04N 5/225, H04N 5/93, H04N 101/00

(54) **IMAGING DEVICE AND IMAGING SYSTEM**

(30) Priority: 28.11.2005 JP 2005341819
(71) Applicant: Sony Corporation, Minato-ku Tokyo (JP)
(72) Inventor: FUKUMOTO, Satoshi, Tokyo 141-0001 (JP); NARA, Shinya, Shinagawa-ku Tokyo 141-0001 (JP)
(74) Representative: Melzer, Wolfgang
(86) International application number: PCT/JP2006/322183
(87) International publication number: WO 2007/060830

(57) **Abstract**

To provide the technology of an image-pickup device that can easily determine whether or not an image is photographed by mounting an interchangeable lens designed for an image-pickup device of an exposure-surface size different from an image-pickup element provided in a camera body. In an image-pickup system, when shooting is performed by mounting an interchangeable lens ready for an image-pickup surface of a size smaller than an image-pickup surface of an image-pickup element installed in the camera body (camera-main body), the main image (high-resolution record image) corresponding to a partial region at the center of the image-pickup surface, the partial region being free of vignetting caused by an insufficient circle, is generated, and a reduced image (e.g, a thumbnail image) is generated by reducing a whole image obtained on the entire image-pickup surface (steps ST10 and ST12). Subsequently, the vignetting can be visually identified in an image photographed in the state where an inappropriate interchangeable lens is mounted when the reduced image is displayed (when the image reproduction is performed) so that it becomes possible to easily determine that the image is photographed by mounting the inappropriate interchangeable lens.

## Description

### Technical Field

The present invention relates to the technology of an image-pickup device, where an interchangeable lens can be mounted and/or demounted on and/or from the image-pickup device.

### Background Art

In many cases, an image-pickup element having an APS-sized image-pickup surface (exposure surface) is installed in the body of a digital camera (camera body) on which an interchangeable lens can be mounted. On the other hand, a camera body on which an image-pickup element having an image-pickup surface of a size larger than the APS size, for example, a 35 mm full-sized image-pickup surface is mounted is being put into commercial production.

However, if an inappropriate interchangeable lens designed for the image-pickup element of the APS size is mounted on the camera body on which the large-sized image-pickup element is mounted, vignetting occurs in a photographed image due to an insufficient image circle.

As a means of solving the above-described problem, there is a technology disclosed in Japanese Unexamined Patent Application Publication No. 2003-18449, for example. According to the above-described technology, an image cut from the center part of an image free of the vignetting at an arbitrary ratio is enlarged and recorded. Subsequently, it becomes possible to record an appropriate image.

According to the above-described technology disclosed in Japanese Unexamined Patent Application Publication No. 2003-18449, however, an image from which the vignetting is removed is recorded. Therefore, even though the recorded image is reproduced, it is difficult to determine whether the reproduced recorded image is an image photographed by mounting the above-described inappropriate interchangeable lens.

Accordingly, the present invention has been achieved, so as to offer the technology of an image-pickup device that can easily determine whether or not an image is photographed by mounting an interchangeable lens designed for an image-pickup device having an exposure-surface size different from an image-pickup element provided in a camera body.

### Disclosure of the Invention

For solving the above-described problems, the invention of Claim 1 is an image-pickup device to and/or from which an interchangeable lens designed for an image-pickup device whose exposure surface is of a first size can be mounted and/or demounted. The image-pickup device includes (a) an image-pickup element including an exposure surface having a second size, where the image-pickup element acquires an image relating to a subject, (b) determination means configured to determine that the first size is smaller than the second size, which indicates size disagreement, after the interchangeable lens is mounted, and (c) image-generation means configured to generate a partial image cut from a whole image obtained on the exposure surface of the image-pickup element, and a reduced image by reducing the whole image when the size disagreement occurs, wherein the partial image is an image extracted from a whole image from which a vignetting part caused by an insufficient image circle of the interchangeable lens is removed.

Further, according to the invention of Claim 2, the image-pickup device relating to the invention of Claim 1 further includes (d) display means that can perform image display, and (e) display-control means configured to make the display means perform image display on the basis of the reduced image.

Further, according to the invention of Claim 3, in the image-pickup device relating to the invention of Claim 2, when the image display is performed on the basis of the reduced image, a frame including the image region corresponding to the partial image is displayed on the reduced image.

Further, according to the invention of Claim 4, in the image-pickup device relating to the invention of Claim 3, the frame is a frame generated along an outer edge of the image region.

Further, according to the invention of Claim 5, in the image-pickup device relating to the invention of Claim 2, when the image display is performed on the basis of the reduced image, hues relating to the first image region corresponding to the partial image and a second image region other than the first image region are different from each other.

Further, according to the invention of Claim 6, the image-pickup device relating to the invention of Claim 3, or claim 4 further includes (f) selection means configured to select a single reduced image from among a plurality of reduced images displayed by the display means by moving the frame among the plurality of reduced images.

Further, the invention of Claim 7 is an image-pickup system including an interchangeable lens and an image-pickup device to and/or from which the interchangeable lens can be mounted and/or demounted, wherein the interchangeable lens is designed for an image-pickup device whose exposure surface is of a first size, wherein the image-pickup device includes an image-pickup element including an exposure surface having a second size, where the image-pickup element acquires an image relating to a subject, determination means configured to determine that the first size is smaller than the second size, which indicates size disagreement, after the interchangeable lens is mounted, and image-generation means configured to generate a partial image cut from a whole image obtained on the exposure surface of the image-pickup element, and a reduced image by reducing the whole image when the size disagreement occurs, and wherein the partial image is an image extracted from a whole image from which a vignetting part caused by an insufficient image circle of the interchangeable lens is removed.

According to the invention of Claim 1, or Claim 7, when it is determined that the first size is smaller than the second size, which indicates the size disagreement, after the interchangeable lens designed for the image-pickup device whose exposure surface is of the first size is mounted, the image that is the partial image cut from the whole image obtained on the exposure surface of the image-pickup element and that is extracted from the whole image from which the vignetting part caused by the insufficient image circle of the interchangeable lens is removed, and the reduced image obtained by reducing the whole image are generated. As a result, the reduced image is displayed so that it becomes possible to easily determine that the image is photographed by mounting the interchangeable lens relating to the disagreement between the sizes of the exposure surfaces.

Particularly, according to the invention of Claim 2, the display means is made to perform the image display on the basis of the reduced image. Therefore, it becomes possible to determine that the image is photographed by mounting the interchangeable lens relating to the disagreement between the sizes of the exposure surfaces with stability.

Further, according to the invention of Claim 3, when the image display is performed on the basis of the reduced image, the frame including the image region corresponding to the partial image is displayed on the reduced image. Therefore, the vignetting part can be easily identified.

Further, according to the invention of Claim 4, the frame is provided along the outer edge of the image region. Therefore, the range of the partial image from which the vignetting part is removed becomes clear.

Further, according to the invention of Claim 5, when the image display is performed on the basis of the reduced image, the hues relating to the first image region corresponding to the partial image and the second image region other than the first image region are different from each other. Therefore, the vignetting part can be easily identified.

Further, according to the invention of Claim 6, the frame is moved among the plurality of images displayed by the display means so that the first reduced image is selected from among the plurality of reduced images. Therefore, the image selection can be appropriately performed while identifying the vignetting part.

### Brief Description of the Drawings

Fig. 1 shows the outward appearance and configuration of an image-pickup system 100 relating to a first embodiment of the present invention.
Fig. 2 shows the outward appearance and configuration of the image-pickup system 100.
Fig. 3 shows the conceptual illustration of a section viewed at the position III-III shown in Fig. 1.
Fig. 4 is a block diagram showing the functional configuration of an image-pickup system 100A.
Fig. 5 illustrates the mounting of an inappropriate interchangeable lens 102.
Fig. 6 shows a whole image Go acquired when the inappropriate interchangeable lens 102 is mounted.
Fig. 7 shows a main image (partial image) Gp cut from the whole image Go when the inappropriate interchangeable lens 102 is mounted.
Fig. 8 illustrates each of image regions IGa and IGb that are provided, so as to obtain a main image.
Fig. 9 illustrates a main image and a reduced image that are recorded when the inappropriate interchangeable lens 102 is mounted.
Fig. 10 is a flowchart showing basic operations of the image-pickup system 100.
Fig. 11 illustrates the image reproduction performed in the image-pickup system 100.
Fig. 12 illustrates the reproduction and selection of a plurality of images photographed by mounting an appropriate interchangeable lens 102.
Fig. 13 illustrates the reproduction and selection of a plurality of images photographed by mounting the inappropriate interchangeable lens 102.

### Best Mode for Carrying Out the Invention

### <First Embodiment>

### <Outline of Image-Pickup System>

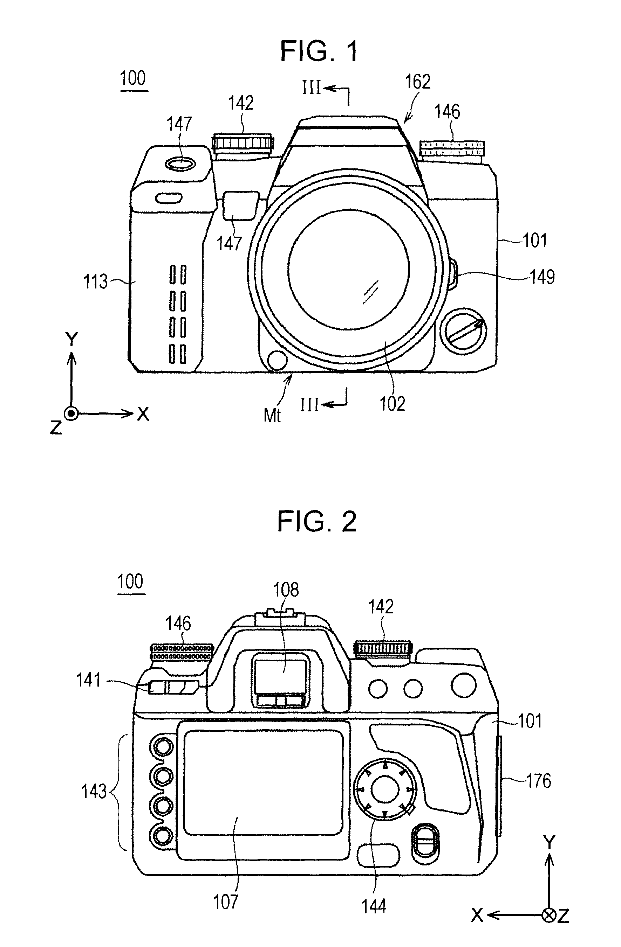

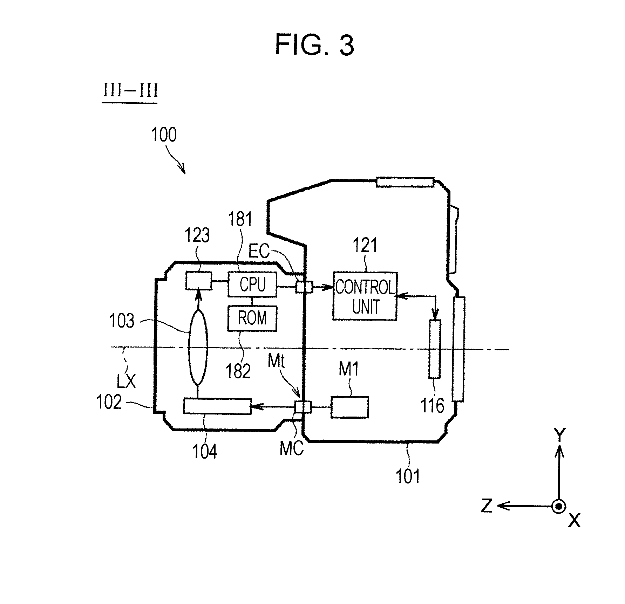

Figs. 1 and 2 show the outward appearances and configurations of an image-pickup system 100 according to a first embodiment of the present invention. Here, Fig. 1 shows an external front view of the image-pickup system 100 and Fig. 2 shows an external rear view of the image-pickup system 100. Further, Fig. 3 shows the conceptual illustration of a section viewed at the position III-III shown in Fig. 1.

As shown in Fig. 1, the image-pickup system 100 is configured, as a single-lens-reflex-digital-still camera including a camera-main body (camera body) 101 and an interchangeable lens 102 mounted on the substantially center part of the front of the camera-main body 101 in a detachable manner.

In Fig. 1, the camera-main body (image-pickup device) 101 includes a mount section Mt where the interchangeable lens 102 is mounted at the approximate center of the front part, a mount-and-demount button 149 provided in the vicinity of the mount section Mt, so as to mount and/or demount the interchangeable lens, a grip unit 113 provided at the left end of the front, so as to be grasped by a photographer, and an AF-auxiliary-light-emission unit 163 that emits auxiliary light, so as to achieve AF.

Further, the camera-main body 101 includes a control-value-setting dial 146 provided on the upper-right part of the front thereof, so as to set a control value, a mode-setting dial 142 provided on the upper-left part of the front thereof, so as to switch between photographic modes, and a release button 147 provided on the top face of the grip unit 113, so as to instruct to start making an exposure. Further, the camera-main body 101 includes a pop-up flash 162, for example, where the pop-up flash 162 emits light so that a subject is irradiated with the light while shooting is performed by using flash. The mount section Mt has a connector EC provided, so as to achieve electrical connection to a CPU 181 provided in the mounted interchangeable lens 102, and a coupler MC provided, so as to achieve mechanical connection to the CPU 181.

The connector EC is provided, so as to transmit lens information about the type and/or type number of the interchangeable lens 102 from a lens ROM (read-only memory) 182 included in the above-described lens to an entire-control unit 121 provided in the camera-main body 101, and/or transmit the position of a focus lens 103 or the like to the entire-control unit 121, the lens position being detected by a lens-position-detection unit 123.

The coupler MC transfers the drive power of a focus-lens-drive motor M1 provided in the camera-main body 101 to a lens-drive mechanism 104 provided in the interchangeable lens 102. The lens-drive mechanism 104 moves the focus lens 103 in the light-axis direction LX.

In Fig. 1, the grip unit 113 includes a battery-housing chamber and a card-housing chamber. For example, four AA batteries are housed in the battery-housing chamber, as the power of the camera, and a memory card 176 used for recording data on a photographed image is housed in the card-housing chamber in a detachable manner.

The mode-setting dial 142 is provided, so as to set various types of camera modes (including a still-image-photographic mode where a still image is photographed and a moving-image-photographic mode where a moving image is photographed, a reproduction mode where a photographed image is reproduced, a communication mode where data is transmitted and received between an external device and the camera, and so forth).

The release button 147 is configured, as a two-click switch provided, so as to perform a "half-depressed state S1"-operation by depressing the release button 147 partway and a "fully-depressed state S2"-operation by fully depressing the release button 147. When the release button 147 is depressed partway in the still-image-photographic mode, preparation operations (operations performed, so as to prepare for the exposure-control-value setting, the focus adjustment, and so forth) are performed, so as to acquire a still image of the subject. When the release button 147 is fully depressed, photographic operations (a series of operations performed, so as to expose an image-pickup element 116 that will be described later and perform predetermined image processing for an image signal obtained through the above-described exposure) are performed.

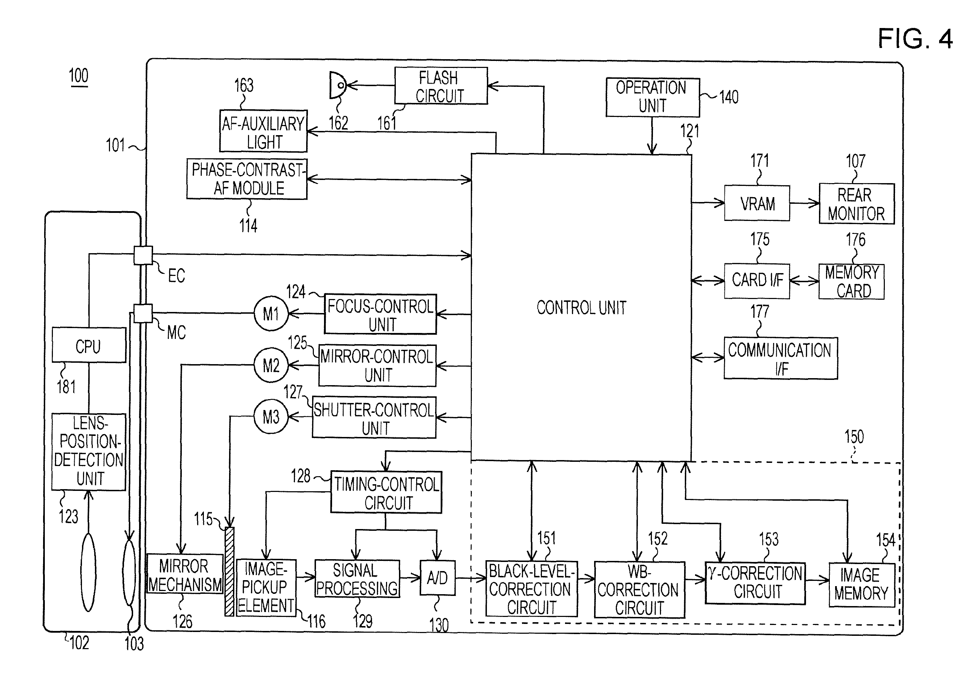

In Fig. 2, a finder window 108 is provided in the approximate center of the upper rear part of the camera-main body 101. The subject image transmitted from the interchangeable lens 102 is led to the finder window 108. The photographer can visually identify the subject by looking into the finder window 108. More specifically, the subject image passed through the interchangeable lens 102 is reflected in an upper direction through a mirror mechanism 126 (refer to Fig. 4). Subsequently, the subject image is formed on a focusing glass and the image passed through a pentaprism is viewed via an ocular, so that the subject image can be visually identified. Further, the finder window 108 includes a liquid-crystal-display unit displaying various data items indicating the shutter speed, aperture value, and other statuses of the image-pickup device 100. Therefore, the photographer can confirm the various statuses of the image-pickup system 100 by looking into the finder window 108.

A rear monitor 107 is provided in the approximate center of the rear part of the camera-main body 101. The rear monitor 107 is configured, as a color-liquid-crystal display, for example, so as to display a menu-screen image used for setting photographic conditions or the like, reproduce and display a photographed image stored in the memory card 176 in the reproduction mode, and so forth.

A main switch 141 is provided on the upper-left part of the rear monitor 107. The main switch 141 includes a two-position-slide switch. If a contact point is set to the position "OFF" on the left side, the power is turned off. If the contact point is set to the position "ON" on the right side, the power is turned on.

A direction-selection key 144 is provided on the right of the rear monitor 107. The direction-selection key 144 includes a circular operation button. Each of depression operations performed by depressing the operation button in four directions including horizontal and lateral directions is detected, and each of depression operations performed by depressing the operation button in four directions including an upper-right direction, an upper-left direction, a lower-right direction, and lower-left direction is detected. Further, the direction-selection key 144 is also used, so as to detect a depression operation performed for a push button provided in the center part, apart from the above-described eight-direction-depression operations.

A group of setting buttons 143 including a plurality of buttons is provided on the left of the rear monitor 107, so as to make settings on a menu-screen image, delete an image, and so forth.

Fig. 4 is a block diagram showing the functional configuration of the image-pickup system 100.

In the image-pickup system 100, the control unit 121 is provided, as a main microcomputer controlling the image-pickup system 100 in a centralized manner on the basis of an instruction that is transmitted from the photographer through an operation unit 140, the position of the focus lens 103, the position being detected by the lens-position-detection unit 123, and so forth.

The operation unit 140 includes the above-described main switch 141, mode-setting dial 142, setting-button group 143, release button 147, and so forth.

The control unit 121 detects the lens position of the focus lens 103 or the like, the lens position being detected by the lens-position-detection unit 123, by using the CPU 181 provided in the interchangeable lens 102. Then, the control unit 121 drives the focus lens 103 provided in the interchangeable lens 102 by controlling a motor M1 by using a focus-control unit 124. Here, the focus lens 103 is moved according to the defocus amount obtained by a phase-contrast-AF module 114 so that the focus control can be achieved.

The control unit 121 controls a motor M2 by using the mirror-control unit 125, so as to drive a quick-return mirror or the like provided in the mirror mechanism 126.

The control unit 121 drives a shutter 115 by controlling a motor M3 by using a shutter-control unit 127.

The control unit 121 controls the image-pickup element 116 configured, as a CCD or the like, a signal-processing unit 129, and an A/D-conversion unit 130 by using a timing-control circuit 128.

The image-pickup element 116 is of the size (36 mm x 24 mm) of the image-pickup surface corresponding to a 35 mm full-sized film, for example. An analog-signal image picked up by the image-pickup element 116 is converted into digital-signal image data by the signal-processing unit 129 and the A/D-conversion unit 130, and input to an image-processing unit 150. In the image-processing unit 150, the image data is subjected to various types of image processing in a black-level-correction circuit 151, a WB-correction circuit 152, and a γ-correction circuit 153, and stored in an image memory 154.

The image data processed in the image-processing unit 150 is displayed on the rear monitor 107 by using a VRAM 171, stored in the memory card 176 by using a card I/F 175, externally transmitted by using a communication I/F 177 standardized by USB or the like.

The control unit 121 emits flash 162 through a flash circuit 161 and/or makes the AF-auxiliary-light-emission unit 163 AF emit light, for example, as required.

### <Mounting of Inappropriate Interchangeable Lens 102>

In the image-pickup system 100, the interchangeable lens 102 can be mounted on the camera-main body 101, so long as the mount section Mt can be adapted to the interchangeable lens 102. However, the interchangeable lens 102 which is inappropriate may be mounted, as described below.

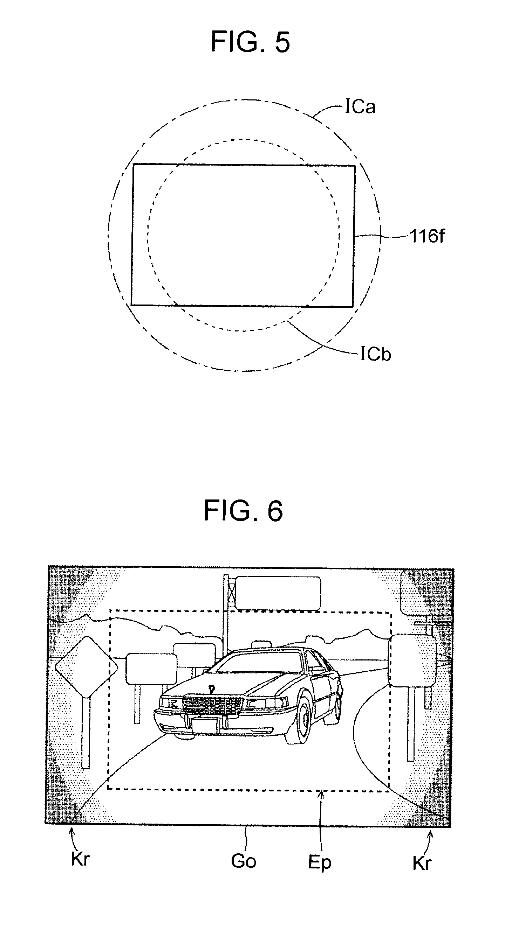

If the interchangeable lens 102 adaptable to the image-pickup-surface size of the image-pickup element 116 provided in the camera-main body 101 is mounted, an image circle Ica specified by the interchangeable lens 102 includes an image-pickup surface 116f of the image-pickup element 116, as shown in Fig. 5, for example, so that shooting can be appropriately performed. On the other hand, if the interchangeable lens 102 which is not adaptable to the size of the image-pickup surface of the image-pickup element 116, for example, the interchangeable lens 102 designed for an image-pickup surface of the APS size (23 mm x 16 mm) smaller than the above-described full size (36 mm x 24 mm), for example, is mounted, an image circle ICb specified by the interchangeable lens 102 does not include the image-pickup surface 116f of the image-pickup element 116, as shown in Fig. 5, for example. Subsequently, in a whole image acquired in the effective pixel region corresponding to the image-pickup surface 116f of the image-pickup element 116, the brightness of longitudinal-directional end parts of an image (particularly four corner parts of the image) is reduced, as is the case with an image Go shown in Fig. 6, for example, and vignetting Kr occurs in the peripheral part of the image due to an insufficient image circle.

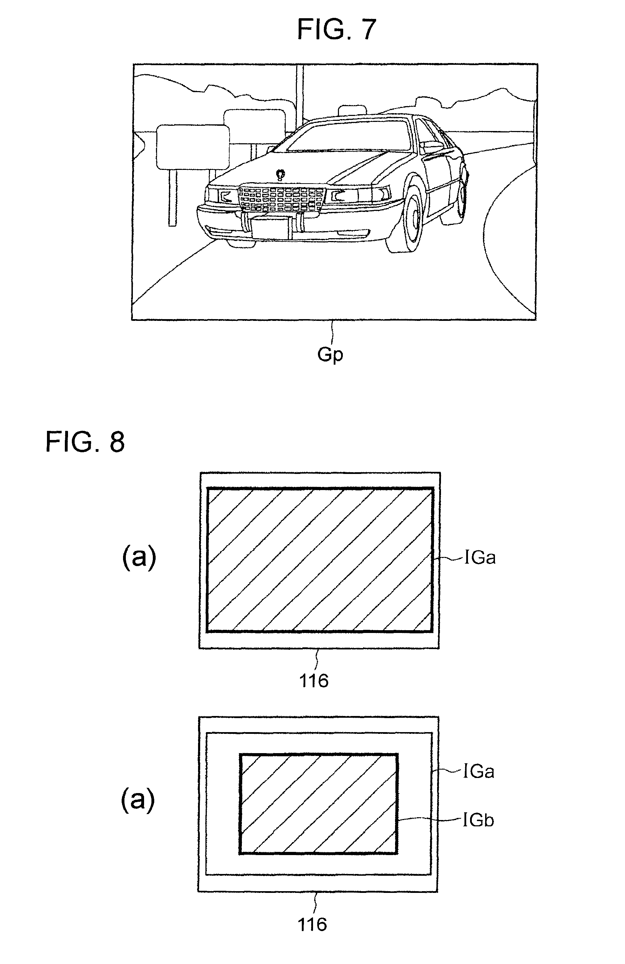

Thus, if the interchangeable lens 102 designed for a camera body with the image-pickup surface (exposure surface) of the APS size smaller than the full size is mounted on the camera body 101, the vignetting Kr occurs. Therefore, as for a main image (high-resolution record image) recorded in the memory card 176 at high resolution, an image region Ep in the center part free of the reduced brightness is cut from the whole image Go. Here, the image region Ep is a region that is similar to the whole image Go and that maintains the aspect ratio of the whole image Go. By extracting the above-described image region Ep from the whole image Go, the peripheral area of the image is trimmed, the peripheral area including the vignetting Kr (Fig. 6), so that a sharp image (partial image) Gp can be generated, as shown in Fig. 7.

Therefore, in the image-pickup system 100, if the interchangeable lens 102 adapted to the size of the image-pickup surface of the image-pickup element 116 is mounted, a whole image obtained from the image region (hereinafter often referred to as a "whole region") IGa (Fig. 8(a)) corresponding to the entire image-pickup surface of the image-pickup element 116 is recorded, as a main image. On the other hand, if the inappropriate interchangeable lens 102 which is not adaptable to the size of the image-pickup surface of the image-pickup element 116 is mounted, a partial image obtained from an image region (hereinafter often referred to as a "partial region") IGb (Fig. 8(b)) smaller than the above-described image region IGa is recorded, as the main image. The partial region IGb of the image-pickup surface is set, as a region of the size (area) corresponding to the APS-sized image-pickup surface, for example. In general, however, the partial region IGb is set, as a region of the size corresponding to the size of the image-pickup surface of an image-pickup element adaptable to the mounted interchangeable lens 102.

As has been described, when the inappropriate interchangeable lens 102 is mounted, the appropriate image free of the vignetting Kr can be recorded, as the main image. However, if the main image is reproduced, it is difficult to determine whether or not the main image is photographed by mounting the inappropriate interchangeable lens 102. In the image-pickup system 100, therefore, a low-resolution reduced image (a thumbnail image or the like) is generated through the image reproduction so that the vignetting Kr (Fig. 6) can be visually identified.

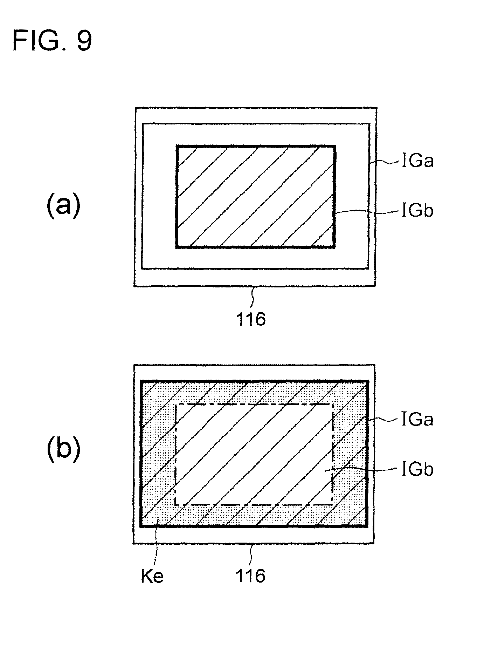

That is to say, if the inappropriate interchangeable lens 102 is mounted, the partial image obtained on the partial region IGb shown in Fig. 9(a) is recorded, as the main image. Further, as shown in Fig. 9(b), a reduced image obtained by downsizing the whole image obtained on the whole region IGa including a vignetting region Ke of the image-peripheral part including the vignetting, as shown in Fig. 9(b), is generated and recorded.

The above-described operations performed by the image-pickup system 100 will be specifically described, as below.

### <Operations of Image-Pickup System 100>

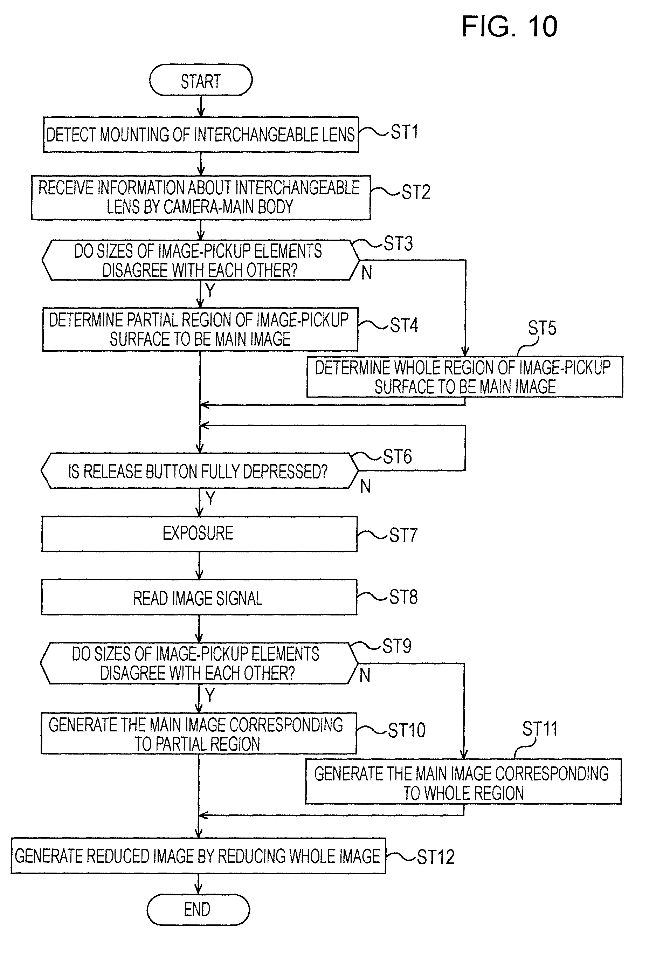

Fig. 10 is a flowchart showing basic operations of the image-pickup system 100. The operations are performed by the control unit 121.

First, when the interchangeable lens 102 is mounted by the user, the mounting is detected (step ST1). Here, it is determined whether or not communications with the CPU 181 can be performed via the connector EC, so as to determine whether or not the interchangeable lens 102 is mounted on the mount section Mt.

At step ST2, the control unit 121 of the camera-main body 101 receives information about the interchangeable lens 102, the information being stored in the ROM 182.

At step ST3, it is determined whether or not the image-pickup-surface size of the image-pickup element 116 provided in the camera-main body 101 disagrees with the image-pickup-surface size of an image-pickup element provided in a camera body to which the interchangeable lens 102 should be mounted on the basis of the information about the interchangeable lens 102, the information being received, at step ST2. That is to say, after the interchangeable lens 102 designed for a camera body whose exposure surface is of a predetermined size (the first size) is mounted, it is determined whether or not the predetermined size is smaller than the size (the second size) of an image-pickup surface where the image-pickup element 116 is provided, which means the size disagreement. More specifically, if the type or type number of the interchangeable lens 102 is received, for example, as the unique information of the lens, at step ST2, the image-pickup-surface size of the image-pickup element adaptable to the interchangeable lens 102 is recognized on the basis of the unique information, and the image-pickup-surface size is compared with the image-pickup-surface size of the image-pickup element 116. Here, if a data table where the type number or the like of the interchangeable lens and the image-pickup-surface size of the image-pickup element adaptable thereto are written, for example, is stored in a memory of the control unit 121, the size of the image-pickup element can be recognized on the basis of the type number or the like of the interchangeable lens by referring to the data table.

If the sizes of the image-pickup elements disagree with each other, at step ST3, the processing advances to step ST4. If the sizes agree with each other, the processing advances to step ST5.

At step ST4, the partial region IGb of the image-pickup surface shown in Fig. 8(b) is set, as the image range of the main image.

At step ST5, the whole region IGa of the image-pickup surface shown in Fig. 8(a) is set, as the image range of the main image.

At step ST6, it is determined whether or not the release button 147 is fully depressed by the user. If the release button 147 is fully depressed, the processing advances to step ST7, and if the release button 147 is not fully depressed, step ST6 is performed again.

At step ST7, an exposure is made by driving the shutter 115 and the mirror mechanism 126. Subsequently, the image-pickup element 116 generates an image signal of the subject.

At step ST8, the image signal generated by the image-pickup element 116 through the exposure, at step ST7, is read.

At step ST9, it is determined whether or not the image-pickup-surface size of the image-pickup element 116 provided in the camera-main body 101 disagrees with the image-pickup-surface size of the image-pickup element provided in the camera body to which the interchangeable lens 102 should be mounted, as is the case with step ST3. If the sizes of the image-pickup elements disagree with each other, the processing advances to step ST10, and if the sizes agree with each other, the processing advances to step ST11.

At step ST10, the main image corresponding to the partial region IGb (Fig. 8(b)) set, at step ST4, is generated. The main image is the partial image Gp (Fig. 7) extracted from the image region Ep of the whole image Go except the part corresponding to the vignetting Kr shown in Fig. 6, for example. The main image is subjected to the image processing in the image-processing unit 150 and stored in the memory card 176.

At step ST 11, the main image corresponding to the partial region IGa (Fig. 8(a)) set, at step ST5, is generated. The main image is a photographed image obtained in the normal state where the appropriate interchangeable lens 102 is mounted. The main image is subjected to the image processing in the image-processing unit 150, and stored in the memory card 176.

At step ST12, the whole image obtained on the whole region IGa (Fig. 8(a)) is reduced so that a reduced image is generated. As for the reduced image, the resolution of an image of the whole region IGa including the vignetting region Ke shown in Fig. 9(b) is lowered even though the inappropriate interchangeable lens 102 is mounted, as described above. Then, the reduced image is stored in the memory card 176.

According to the above-described operations, the photographed image is stored in the memory card 176. When the photographed image is reproduced, the reduced image stored in the memory card 176 is displayed on the rear monitor 107.

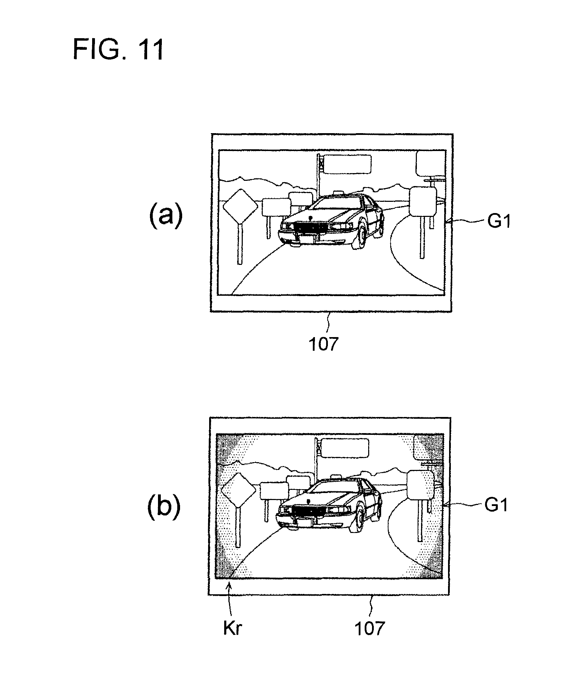

Namely, if a single frame of a single photographed image obtained by mounting the appropriate interchangeable lens 102 is reproduced, a reduced image G1 free of the vignetting is displayed on the rear monitor 107, as shown in Fig. 11(a). On the other hand, if a single frame of a single photographed image obtained by mounting the inappropriate interchangeable lens 102 is reproduced, a reduced image G2 including the vignetting Kr is displayed on the rear monitor 107, as shown in Fig. 11(b), for example. By confirming the presence and/or absence of the vignetting in the above-described displayed reduced image, the user can easily determine whether or not the image is photographed by mounting the inappropriate interchangeable lens 102.

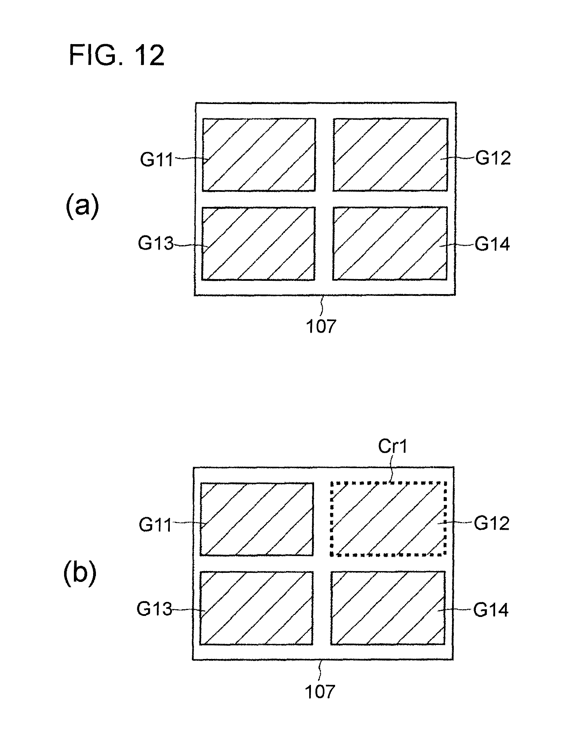

Further, when four images photographed by mounting the appropriate interchangeable lens 102 are reproduced on one and the same screen image, four reduced images G11 to G14 free of the vignetting are displayed on the rear monitor 107 (Fig. 12(a)), as is the case with the above-described one-frame reproduction. If the user selects a single image on the reproduction screen image, so as to delete a predetermined image stored in the memory card 176, for example, the image is specified by using a cursor Cr1 moving among the reduced images G11 to G14 according to the operation of the direction-selection key 144 (Fig. 12(b)). Here, the cursor Cr1 is provided, as a frame generated along the outer edge of the reduced image.

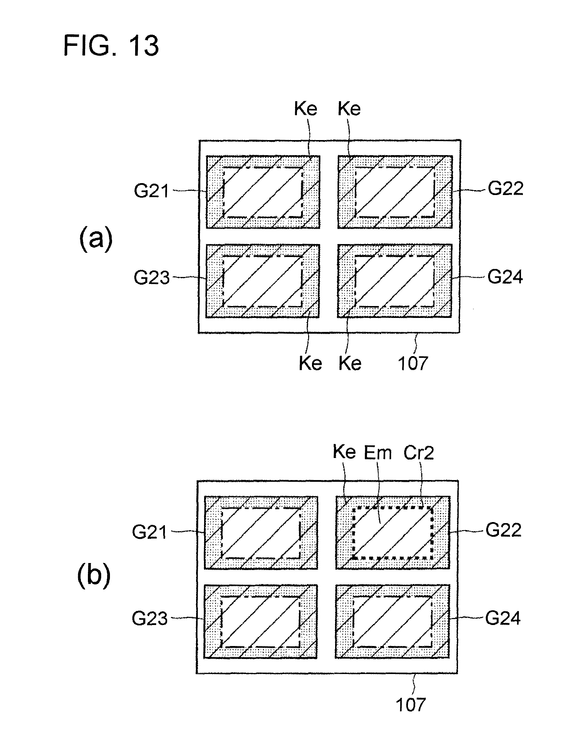

On the other hand, when four images photographed by mounting the inappropriate interchangeable lens 102 are reproduced on one and the same screen image, four reduced images G21 to G24 including the vignetting region Ke are displayed on the rear monitor 107, as shown in Fig. 13(a). If the user selects a single image on the reproduction screen image, the image is specified by using a cursor Cr2 moving among the plurality of reduced images G21 to G24 according to the operation of the direction-selection key 144 (Fig. 13(b)). Contrasted with the above-described cursor Cr1 (Fig. 12(b)), the cursor Cr2 is displayed on the reduced image, as a frame including the image region Em corresponding to the main image (partial image), and provided, as a frame generated along the outer edge of the image region Em.

Here, in the reproduction screen image shown in Fig. 13, the part corresponding to the vignetting region Ke is filled in with gray or black, for example, so as to clearly show the vignetting region Ke, so that the hues relating to the image region (the first image region) Em corresponding to the main image and the vignetting region (the second image region) Ke other than the image region Em become different from each other.

Due to the above-described operations of the image-pickup system 100, when the interchangeable lens 102 adaptable to an image-pickup surface of the size smaller than the image-pickup surface of the image-pickup element 116 mounted in the camera-main body 101 is mounted, the main image is generated by cutting the image-center part free of the vignetting from the whole image and the reduced image is generated by reducing the whole image including the vignetting. Subsequently, an appropriate high-resolution recorded image can be generated. Further, the display of the reduced image makes it possible to easily determine whether or not the image is photographed by mounting the inappropriate interchangeable lens.

### <Example Modifications>

- According to the above-described embodiment, the type, type number, and so forth of the lens may not be stored in a ROM 182, as the information of the interchangeable lens 102, and the image-pickup-surface size of the image-pickup element ready for the interchangeable lens 102 may be directly stored in the ROM 182.
- The interchangeable lens according to the above-described embodiment may not be an interchangeable lens designed for a camera body in which an image-pickup element is mounted, but may be an interchangeable lens designed for a camera body in which a silver halide film is set.
- The image region Ep (Fig. 6) according to the above-described embodiment may not be the region maintaining the aspect ratio of the whole image Go. An arbitrary aspect ratio different from the whole image Go may be set for the image region Ep.
- The reduced image according to the above-described embodiment may not be the thumbnail image, but may be a display image (screen nail) or the like.

## Claims

1. An image-pickup device to and/or from which an interchangeable lens designed for an image-pickup device whose exposure surface is of a first size can be mounted and/or demounted, the image-pickup device comprising:
(a) an image-pickup element including an exposure surface having a second size, where the image-pickup element acquires an image relating to a subject,
(b) determination means configured to determine that the first size is smaller than the second size, which indicates size disagreement, after the interchangeable lens is mounted, and
(c) image-generation means configured to generate a partial image cut from a whole image obtained on the exposure surface of the image-pickup element, and a reduced image by reducing the whole image when the size disagreement occurs,
wherein the partial image is an image extracted from a whole image from which a vignetting part caused by an insufficient image circle of the interchangeable lens is removed.

2. The image-pickup device according to Claim 1, further comprising:
(d) display means that can perform image display, and
(e) display-control means configured to make the display means perform image display on the basis of the reduced image.

3. The image-pickup device according to Claim 2,
wherein when the image display is performed on the basis of the reduced image, a frame including the image region corresponding to the partial image is displayed on the reduced image.

4. The image-pickup device according to Claim 3,
wherein the frame is a frame generated along an outer edge of the image region.

5. The image-pickup device according to Claim 2,
wherein when the image display is performed on the basis of the reduced image, hues relating to the first image region corresponding to the partial image and a second image region other than the first image region are different from each other.

6. The image-pickup device according to Claim 3, or claim 4, further comprising:
(f) selection means configured to select a single reduced image from among a plurality of reduced images displayed by the display means by moving the frame among the plurality of reduced images.

7. An image-pickup system including an interchangeable lens and an image-pickup device to and/or from which the interchangeable lens can be mounted and/or demounted,
wherein the interchangeable lens is designed for an image-pickup device whose exposure surface is of a first size,
wherein the image-pickup device includes:
an image-pickup element including an exposure surface having a second size, where the image-pickup element acquires an image relating to a subject,
determination means configured to determine that the first size is smaller than the second size, which indicates size disagreement, after the interchangeable lens is mounted, and
image-generation means configured to generate a partial image cut from a whole image obtained on the exposure surface of the image-pickup element, and a reduced image by reducing the whole image when the size disagreement occurs, and
wherein the partial image is an image extracted from a whole image from which a vignetting part caused by an insufficient image circle of the interchangeable lens is removed.

## Amended claims

### Amended claims under Art. 19.1 PCT

**1.** (Amended) An image-pickup device to and/or from which an interchangeable lens designed for an image-pickup device whose exposure surface is of a first size can be mounted and/or demounted, the image-pickup device comprising:
(a) an image-pickup element including an exposure surface having a second size, where the image-pickup element acquires an image relating to a subject,
(b) determination means configured to determine that the first size is smaller than the second size, which indicates size disagreement, after the interchangeable lens is mounted, and
(c) image-generation means configured to generate a reduced image by reducing a whole image obtained on the exposure surface of the image-pickup element when the size disagreement occurs.

**2.** (Amended) The image-pickup device according to Claim 1,
wherein the image-generation means further generates a partial image cut from the whole image, and
wherein the partial image is an image extracted from a whole image from which a vignetting part caused by an insufficient image circle of the interchangeable lens is removed.

**3.** (Amended) The image-pickup device according to Claim 2, further comprising:
(d) display means that can perform image display, and
(e) display-control means configured to make the display means perform image display on the basis of the reduced image.

**4.** (Amended) The image-pickup device according to Claim 3,
wherein when the image display is performed on the basis of the reduced image, a frame including the image region corresponding to the partial image is displayed on the reduced image.

**5.** (Amended) The image-pickup device according to Claim 4,
wherein the frame is a frame generated along an outer edge of the image region.

**6.** (Amended) The image-pickup device according to Claim 3,
wherein when the image display is performed on the basis of the reduced image, hues relating to the first image region corresponding to the partial image and a second image region other than the first image region are different from each other.

**7.** (Amended) The image-pickup device according to Claim 4, further comprising:
(f) selection means configured to select a single reduced image from among a plurality of reduced images displayed by the display means by moving the frame among the plurality of reduced images.

**8.** Added) An image-pickup system including an interchangeable lens and an image-pickup device to and/or from which the interchangeable lens can be mounted and/or demounted,
wherein the interchangeable lens is designed for an image-pickup device whose exposure surface is of a first size,
wherein the image-pickup device includes:
an image-pickup element including an exposure surface having a second size, where the image-pickup element acquires an image relating to a subject, determination means configured to determine that the first size is smaller than the second size, which indicates size disagreement, after the interchangeable lens is mounted, and
image-generation means configured to generate a reduced image by reducing a whole image obtained on the exposure surface of the image-pickup element when the size disagreement occurs.

**9.** Added) An image-pickup method used for an image-pickup device to and/or from which an interchangeable lens designed for an image-pickup device whose exposure surface is of a first size can be mounted and/or demounted, the image-pickup method comprising the steps of:
(a) providing an exposure surface having a second size and acquiring an image relating to a subject,
(b) determining that the first size is smaller than the second size, which indicates size disagreement, after the interchangeable lens is mounted, and
(c) generating a reduced image by reducing a whole image obtained on the exposure surface of the image-pickup element when the size disagreement occurs.
